# EUROPEAN PATENT SPECIFICATION

(11) **EP 1 377 050 B1**
(45) Date of publication and mention of the grant of the patent: **30.11.2005**
(21) Application number: 03253738.3
(22) Date of filing: 13.06.2003
(51) Int. Cl.: H04N 5/445

(54) **Video apparatus having an OSD function**
Videogerät mit OSD-Funktion
Appareil vidéo avec une fonction OSD

(30) Priority: 26.06.2002 KR 2002036057
(43) Date of publication of application: 02.01.2004
(73) Proprietor: SAMSUNG ELECTRONICS CO., LTD., Suwon-si, Gyeonggi-do 442-742 (KR)
(72) Inventor: Kang, Eun-Jung, Hwaseo-2-dong, Jangan, Suwon, Gyunggi-do (KR)
(74) Representative: Geary, Stuart Lloyd

(56) References cited:
- EP-A- 0 996 307
- EP-A- 1 111 499
- WO-A-03/017079
- US-B1- 6 169 543
- US-B1- 6 175 386

## Description

The present invention relates to a video reproduction device comprising a reproduction component, adapted to read out video data stored in a recording medium, an on-screen display (OSD) menu component, adapted to store and output graphic data in order to set an OSD menu display, and a controller, adapted to select and display the video data and/or the graphic data, and a decoder for decoding video data from the reproduction component. The present invention also relates to method of operating a video reproduction device, the method comprising reading out video data stored in a recording medium and storing and outputting graphic data in order to set an OSD menu display"

In recent years, combination devices that employ multiple devices, each having independent functions, into one device have been appearing on the market. Such combination devices have the advantage that they consolidate components that perform common functions for the sake of convenience and thus allow for a much more efficient use of space than when individual devices are separately used.

The combination devices are typically referred to as 'combination systems' or 'combo-systems', and a typical example of such a combination system is a digital video disk player/video cassette recorder (DVDP/VCR) combination system which one system having DVD player and VCR functions.

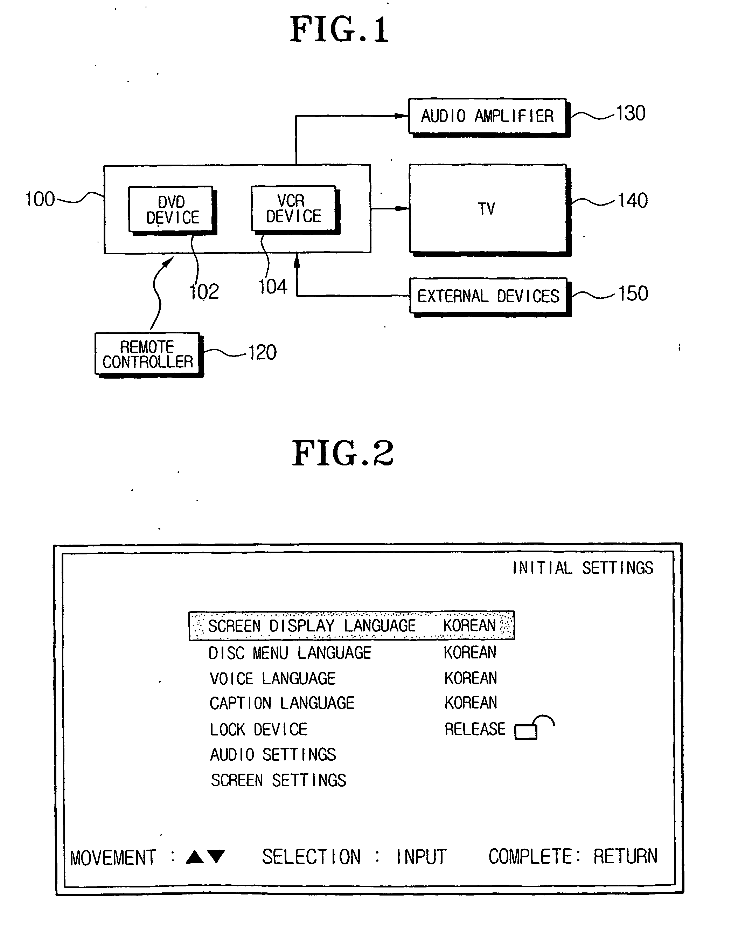

Figure 1 is a schematic view of a DVDP/VCR combination system and peripheral devices coupled thereto. The DVDP/VCR combination system 100 includes a DVD device 102 for performing DVD player functions for reproducing images and sounds recorded on a DVD and a VCR device 104 for performing the functions for reproducing images and sounds recorded on magnetic tape and the VCR functions for recording a signal on magnetic tape.

The DVDP/VCR combination system 100 can be coupled to a display device, such as a TV set 140 or the like, for outputting images and sounds reproduced by the internal DVD device 102 or the internal VCR device 104, as well as to an audio amplifier 130 or the like for outputting audio reproduced by the DVD device 102 with high quality. Furthermore, an external device 150, such as a camcorder or the like, can be coupled to the DVDP/VCR combination system 100 and the DVDP/VCR combo-system 100 can receive and record images and sounds from such an external device 150.

In addition, the DVD device 102 and the VCR device 104 in the DVDP/VCR combination system 100 have the appearance of a single device. A user can use an input device, such as a remote controller 120 or the like, a key input part (not shown) provided on the front of the DVDP/VCR combination system 100, to switch between the DVD device 102 and the VCR device 104 and can also controil the individual functions for each of the DVD device 102 and the VCR device 104.

Combination systems, as described above, generally have an OSD block (not shown) for providing a user with menu items which the user can use to provide input to the system 100 through an OSD function. If a user selects the OSD function in order to input an operation command through the manipulations of the remote controller 120 or the like, menu items that can be viewed and selected by the user are displayed on the screen of the TV set 140 or the like. The user can easily control operations using such menu items. Such menu items include commands relating to the environment of the DVD device 102 or the VCR device 104, in addition to the general operations of the DVD device 102 or the VCR device 104 such as record/play, stop, fast forward, rewind, and so on.

Figure 2 illustrates an OSD image of a conventional DVDP/VCR combination system.

Referring to Figure 2, menu items for 'initial settings', 'screen display language', 'disc menu language', 'voice language', 'caption language', 'lock device', 'audio settings' and 'screen settings' are displayed in the OSD image. Button identifiers are displayed at the bottom of the OSD image to guide the user in their interaction with the OSD image. That is, the user is informed that the buttons marked '▲' and '▼' on the remote controller 120 or other input device can be used to step through the menu items, the selection button can be used to select a menu item and inputting a command, and the end button can be used to return to a previous screen.

The item 'initial settings' is for initializing settings such as the current date and time record, DVD connection selection, and so on. The item 'screen display language' is for setting the language to be displayed on the screen of the DVD player and the item 'disc menu language' is for setting the language used for the DVD menus. Furthermore, the item 'voice language' is for setting a voice language to be output from speakers, the item 'caption language' is for setting a caption language appearing on the screen of the TV set 140 or the like, and the item 'lock device' is for preventing children from watching unsuitable content. The item 'screen settings' is for setting the state and screen parameters of the TV set 140 connected to the DVDP/VCR combination system 100. When such menu items are selected, the sub-menu items of those menu items are displayed.

However, the conventional DVDP/VCR combination system 100 uses and displays only low-resolution character data on the OSD. This means that the character data for configuring the OSD menu is formed in advance in a font data fashion, and displaying menu items of respective menu displays by using the formed character data limits the use of characters and deteriorates the resolution as compared to DVD video data. Furthermore, the use of the restricted fonts makes it impossible to construct menus in diverse fashions.

Accordingly, a user cannot readily use a graphic user interface (GUI) environments in the DVDP/VCR combination system 100. Furthermore, it is difficult to display respective menu items using complicated characters on an OSD and a user may find it difficult to understand the meanings of the menu items. In addition, an OSD using low-resolution character data lowers the quality of the product in the user's mind.

US6169543 describes a video device having an OSD processor for decoding graphics data and customizing the OSD menu.

The present invention has been devised to solve the above and other problems. It is therefore an object of the present invention to provide a video reproduction device having an OSD that is easy and convenient for users to recognize and use by implementing the OSD in a high-resolution graphic display.

A video reproduction device, according to the present invention, is characterised in that the graphic data is in a form that can be decoded by the decoder and the controller comprises a selection component, adapted to outputting selectively the graphic data from the on-screen display (OSD) menu component and/or video data from the reproduction component (202) to the decoder and a selection control component (240), adapted to control the selection component.

The controller preferably includes a selection component for selectively outputting either the inputted compressed video data or the inputted compressed video data, a decoder part for decoding the compressed data outputted from the selection part, and a selection control component for controlling outputs of the selection part.

The compressed graphic data is preferably compressed and stored in a screen unit to configure one OSD menu display, and the compressed graphic data is preferably compressed in the same format as the compressed video data recorded in the recording medium.

The OSD menu component preferably outputs graphic data for configuring different displays based on a control input of a user, and the OSD menu component is preferably constructed in a different medium from the recording medium. Furthermore, the OSD menu component can be constructed with a semiconductor memory.

A method, according to the present invention, is characterised by selecting and displaying the video data and/or the graphic data, including decoding video data from the reproduction component using a decoding process and decoding the graphic data using said decoding process before display thereof.

Preferred and optional features of the present invention are set forth in claims 2 to 8 and 10 to 15 appended hereto.

An embodiment of the present invention will now be described, by way of example, with reference to Figures 3 to 6 of the accompanying drawings, in which:
Figure 1 is a block diagram of a DVDP/VCR combination system;
Figure 2 is an example of a conventional OSD screen;
Figure 3 is a block diagram of a video reproduction device according to the present invention; and
Figure 4 to Figure 6 show OSD screens of an embodiment of the present invention.

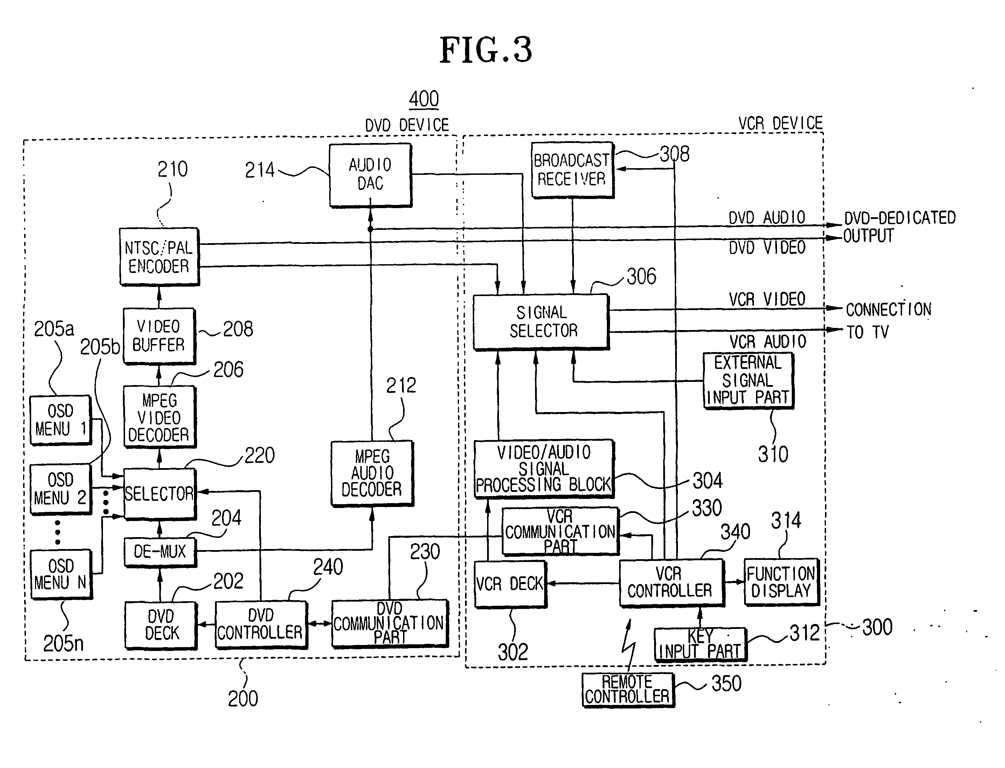

Referring to Figure 3, a DVDP/VCR combination system 400 is constructed with a DVD device 200 that performs the functions of a DVD player, and a VCR device 300 that performs the functions of a VCR device.

The DVD device 200 includes a DVD deck 202, demultiplexer 204, OSD menu components consisting of OSD menu 1 ~ OSD menu n 205a, ..., 205n, MPEG video decoder 206, VIDEO buffer 208, NTSC/PAL encoder 210, MPEG audio decoder 212, audio DAC 214, selector 220, DVD communication component 230 and DVD controller 240.

The DVD deck 202 operates reads data recorded on a DVD to reproduce data from the DVD. The demultiplexer 204 divides the data, read by the DVD deck 202, into an MPEG (Moving Picture Experts Group) video signal and an MPEG audio signal, and transfers the MPEG video signal to the selector 220 and the MPEG audio to the MPEG audio decoder 212.

OSD graphic data is MPEG-encoded and stored in the OSD menu 1 to OSD menu n units 205a, ..., 205n constituting the OSD menu component. In this example, the stored MPEG-encoded graphic data is configured as one data group for each OSD screen which is stored in a respective OSD menu unit 205a, ..., 205n. MPEG-encoding and storing of graphic data for OSD configurations is performed because much data is required to show OSD graphics and compressing data is necessary to effectively store much data in a limited storage device.

The selector 220 selectively outputs, and transfers to the MPEG video decoder 206, the output signals of the OSD menu 1 to OSD menu n units 205a, ..., 205n and the demultiplexer 204. The DVD controller 200 controls which signal the selector 220 selects and outputs. That is, the DVD controller 200 functions as a selection controller for controlling the output of the selector 220.

The MPEG video decoder 206 decodes the MPEG-encoded data output from the selector 220, and the MPEG audio decoder 212 decodes an MPEG-encoded audio signal. The VIDEO buffer 208 functions as a buffer temporarily storing a decoded video signal.

The NTSC/PAL encoder 210 converts the DVD video signal into an NTSC or PAL signal using data stored in the VIDEO buffer 208, and the audio DAC 214 receives data from the MPEG audio decoder 212 and outputs an analogue audio signal. The output of the NTSC/PAL encoder 210 and the output from the audio DAC 214. DVD output signals are output via output ports for Y, Pr and Pb component outputs, S-video outputs, digital audio outputs, and so on, in order for a user to enjoy high video and audio signals.

The MPEG video decoder 206, VIDEO buffer 228, NTSC/PAL encoder 210 and so on, make up a display component that regenerates and displays on a TV set or the like data that the selector 220 selectively outputs.

The DVD controller 240 controls the overall operations of the individual constituents in the DVD device 200 in addition to the selection of the selector 220, and the DVD communication part 230 is used for communication between the DVD device 200 and the VCR device 300.

The VCR device 300 includes a VCR deck 302, video/audio signal processing block 304, signal selector 306, broadcast receiver 308, external signal input part 310, key input part 312, FUNCTION display 314, VCR communication part 330, and VCR controller 340.

The VCR deck 302 can record a signal on a magnetic tape or play a magnetic tape, and the video/audio signal processing block 304 receives and transfers video and audio signals to be recorded or reproduced by the VCR deck 302.

The signal selector 306 selects a signal to be connected to a TV set or the like from an output of the NTSC/PAL encoder 210, an output of the audio DAC 214, an output of the video/audio signal processing block 304, signals from the broadcast receiver 308 and the external signal input part 310, and so on, under the control of the VCR controller 340.

The broadcast receiver 308 can tune to a broadcast channel to receive a desired TV broadcast and the external signal input part 310 has the function of transferring an output signal from an external device, such as a camcorder or the like, to the signal selector 306.

The FUNCTION display 314 shows information such as operation states, operation modes, and the like of the DVDP/VCR combination system 400 in order for a user to view the information and various commands that the user has input through the key input part 312 or the remote controller 350. The VCR controller 340 receives and performs control in accordance with operation commands input by the user using the key input part 312 or the remote controller 350, and also controls the operation of the constituents of the VCR device 300.

The VCR controller 340 and the DVD controller 240 are connected to each other through the VCR communication part 330 and the DVD communication part 230 for sending commands to each other.

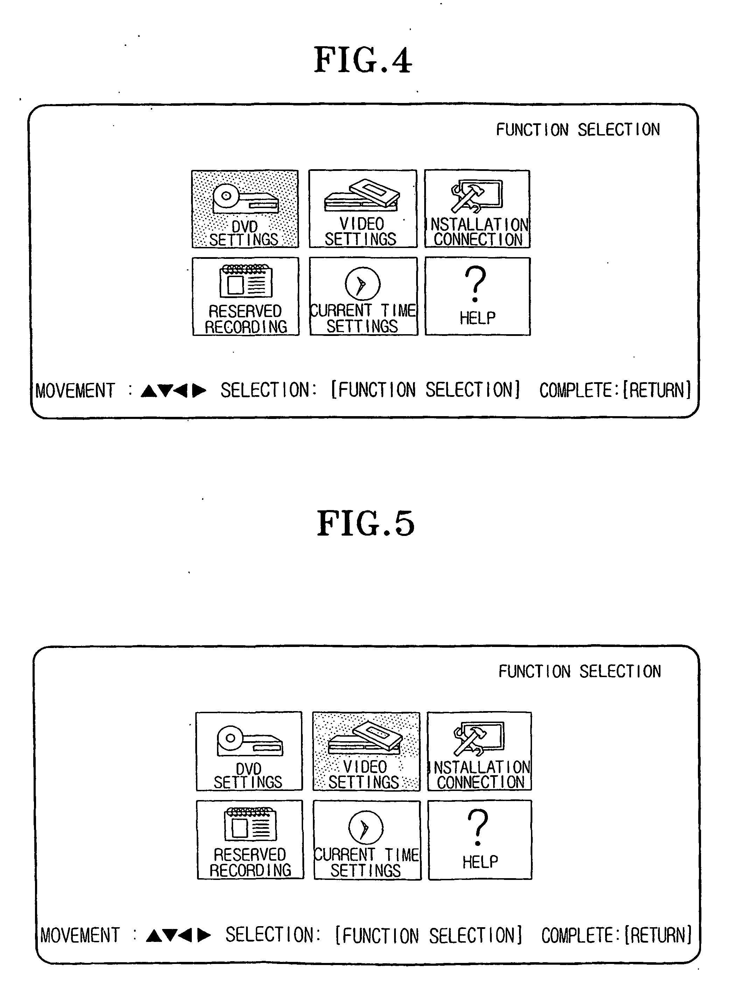

Figure 4 to Figure 6 show examples of OSD screens of the video signal reproduction device shown in Figure 3.

Referring to Figures 4 to 6, the OSD screens are graphical and the menu items for 'DVD settings', 'video settings', 'installation connection', 'reserved recording', 'current time settings', and 'help' are shown in an initial OSD screen by icons.

Guide information is displayed at the bottoms of the screens and includes items entitled 'movement: ▲ ▼ 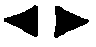 ', 'selection: [function selection]', and 'complete: [return]'. These indicate the functions of buttons on the remote controller 350 or the key input part 312 for interaction with the OSD screen. That is, a user uses the ▲ ▼ 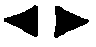 buttons to navigate around the OSD screen, the 'selection' button to select a menu item and the 'complete' button for the completion of an input of an operation command or for returning to a previous screen.

A user can manipulate the up, down, left and right (▲▼ 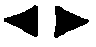 ) movement buttons to move a cursor to one of the menu items shown in the OSD screen. In the drawings, the dotted menu item indicates the menu item on which a cursor is currently placed. A menu item on which the cursor is currently positioned could be indicated by using a different colour, distinct from the colours of the other items.

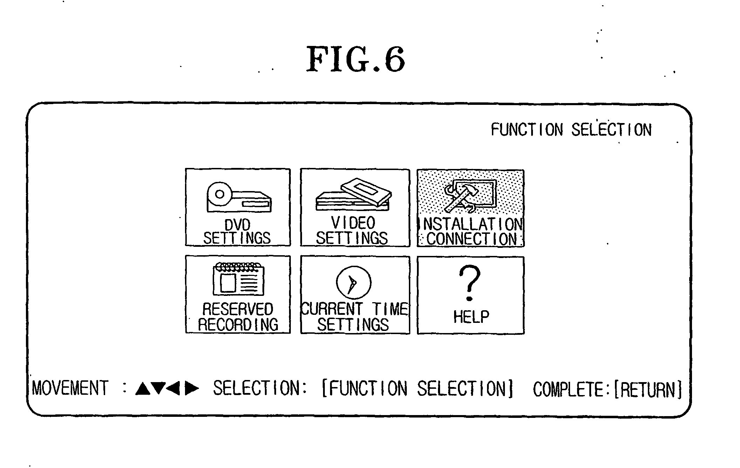

Figure 4 shows the cursor on the 'DVD settings' item by a user, Figure 5 shows the cursor on the 'video settings' item and Figure 6 shows the cursor on the 'installation connection' item.

The OSD graphic data is stored in the OSD menu 1 to OSD menu n units 250a, ..., 250n in order to configure the respective OSD images shown in Figure 4 to Figure 6. For example, the graphic data to construct the image shown in Figure 4 is stored in the OSD menu 1 250a, the graphic data for the image shown in Figure 5 is stored in the OSD menu 250b, and the graphic data for the image shown in Figure 6 is stored in the OSD menu 3 250c. Although not shown in the drawings, the graphic data for constructing an OSD image, in which the 'reserved recording' item is selected is stored in the OSD menu 4 unit, the graphic data for the image, in which the 'current time settings' item is selected, is stored in the OSD menu 5 unit and the graphic data for the image in which the 'help' item is selected is stored in the OSD menu 6.

With the graphic data so stored, when a user presses a button on the remote controller 350 or the key input part 312 to show an OSD screen, the VCR controller 340 receives a signal caused by the button press and transfers the signal to the DVD controller 240 through the VCR communication part 330 and the DVD communication part 230. The DVD controller 200 controls the selector 220 to first output the graphic data stored in the OSD menu 1 unit 250, to display the image shown in Figure 4 on the display device of a TV set or the like.

The user manipulates the up, down, left and right movement buttons (▲▼ 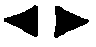 ) to move the cursor and, through the above steps, the OSD menu unit, which stores the appropriate image data, is selected, so that the corresponding OSD image is shown.

The user presses the selection button to select the menu item on which the cursor is currently placed. The menu item selected by the user is again determined in the VCR controller 340 and transferred to the DVD controller 240 through the VCR communication part 330 and the DVD communication part 230. The DVD controller 240 decides which operation has been commanded. If the input command value relates to a DVD function, the DVD controller 240 performs an operation in accordance with command value. If the transferred command value does not relate to the DVD, the DVD controller 240 transfers the command value to the VCR controller 340 through the DVD communication part 230 and the VCR communication part 330, and the VCR controller 340 performs an operation in accordance with the transferred command value.

Pop up OSD sub-menus may be displayed when a menu item is selected by pressing of the selection button. For example, if a user selects the item of 'DVD settings', an OSD image appears which shows a sub-menu related to the DVD settings.
These include the 'screen display language' for setting the screen display language of the DVD display, 'disc menu language' for setting the menu language recorded in the DVD, 'voice language' for setting the voice language to be output from speakers, 'caption language' for setting the caption language, and so on. Further included are the 'lock device' item for limiting programme rates, the 'audio settings' item for connected audio settings, the 'screen settings' item for setting the DVD output for compatibility with a connected TV set or the like, and so on.

If a user selects the 'video settings' item, a 'tape selection' item for selecting the kind of tape to be used, a 'video-dedicated channel selection' item for selecting a video-dedicated channel, an 'iterative reproduction function use' item for enabling repetitive watching from the beginning by automatically rewinding a tape when reproduction is finished and starting the reproduction again upon setting the iterative reproduction, a 'blue screen use' item for using a blue colour screen, a 'quality selection' item for selecting a soft screen and so on upon video reproduction and so on are shown.

The 'reserved recording' item is used when reserved video recording is needed. If a user selects the 'reserved recording' item, an OSD image having menu items for 'channel' for selecting a broadcast channel to be recorded, 'recording start time', 'recording speed' and so on.

If a user selects the 'current time settings' item, the user can set the current time. The current time is used for the reserved recording and the like, and it is possible to use the current time for setting a clock which displays the current time all the time. Furthermore, if a user selects the item of 'help', shown is a help window helping the user use an OSD.

In the case of configuring the OSD screens as described above, the graphic data defining the OSD images is stored independently in the OSD menu 1 to OSD menu n units 205a, ..., 205n respectively, and the selector 220 selects and uses the data in one of the OSD menu 1 to OSD menu n units 205a to 205n at a time. As described above, each menu item displayed in graphic becomes easily recognized in meaning and convenient in use by users.

As described above, in accordance with an embodiment of the present invention, a video reproduction device is provided which shows OSDs in high-resolution graphics, so that users can easily recognize and conveniently use the OSDs. Further, the OSDs processed in high-resolution graphics can contribute to the enhancements of the product quality of the entire system.

## Claims

1. A video reproduction device comprising a reproduction component (202), adapted to read out video data stored in a recording medium, an on-screen display (OSD) menu component (205a, ..., 205n), adapted to store and output graphic data in order to set an OSD menu display, and a controller (220, 240), adapted to select and display the video data and/or the graphic data, and a decoder (206) for decoding video data from the reproduction component (202), **characterised in that** the graphic data is in a form that can be decoded by the decoder (206) and the controller (220, 240) comprises:
a selection component (220), adapted to output selectively the graphic data from the on-screen display (OSD) menu component (205a, ..., 205n) and/or video data from the reproduction component (202) to the decoder (206); and
a selection control component (240), adapted to control the selection component (220).

2. A video reproduction device according to claim 1, wherein the decoder (206) includes decompression means for performing a decompression process for decompressing video data from the reproduction component (202) and said graphic data is compressed in a format that can be decompressed by said decompression process.

3. A video reproduction device according to claim 1 or 2, wherein said OSD menu component (205a, ..., 205n) is adapted to output graphic data for different menus in response to user input.

4. A video reproduction device claim 1, 2 or 3, wherein said OSD menu component (205a, ..., 205n) includes a medium different from the recording medium.

5. A video reproduction device according to any preceding claim, wherein said OSD menu component (205a, ..., 205n) includes a semiconductor memory.

6. A video reproduction device according to any preceding claim, including decompression means for decompressing video data reproduced from a recording medium by the reproduction component (202).

7. A video reproduction device according to any preceding claim, wherein said graphic data is compressed.

8. A method of operating a video reproduction device, the method comprising:
reading out video data stored in a recording medium, and
storing and outputting graphic data in order to set an OSD menu display,
**characterised by** selecting and displaying the video data and/or the graphic data, including decoding video data from the reproduction component using a decoding process and decoding the graphic data using said decoding process before display thereof.

9. A method as claimed in claim 8, further comprising decompressing the video data, reproduced from the recording medium, using a decompression process and decompressing said graphic data using said decompression process.

10. A method according to claim 8 or 9, including responding to a user input to select graphic data for a particular menu for display.

11. A method according to claim 8, 9 or 10, wherein the graphic data is provided from a source other than the recording medium providing the video data.

12. A method according to any one of claims 8 to 11, wherein said graphic data is read from a semiconductor memory for display.

13. A method according to any one of claims 8 to 12, including decompressing the video data reproduced from the recording medium.

14. A method according to any one of claims 8 to 13, including decompressing said graphic data for display.

## Patentansprüche

1. Videoproduktionseinrichtung, eine Reproduktionskomponente (202) umfassend, eingerichtet zum Auslesen von in einem Aufzeichnungsmedium gespeicherten Videodaten, eine Schirmanzeigemenükomponente bzw. OSD-Menükomponente (205a, ..., 205n), eingerichtet zum Speichern und Ausgeben von Grafikdaten, um eine OSD-Menüanzeige einzustellen, und einen Controller (220, 240), eingerichtet zum Auswählen und Anzeigen der Videodaten und/oder der Grafikdaten, und einen Decoder (206) zum Decodieren von Videodaten von der Reproduktionskomponente (202), **dadurch gekennzeichnet, dass** die Grafikdaten in einer Form vorliegen, die von dem Decoder (206) decodiert werden können, und dass der Controller (220, 240) umfasst:
eine Auswahlkomponente (220), eingerichtet zum selektiven Ausgeben der Grafikdaten von der OSD-Menükomponente (205a, ..., 205n) und/oder von Videodaten von der Reproduktionskomponente (202) zu dem Decodierer (206); und
eine Auswahlsteuerkomponente (240), eingerichtet zum Steuern der Auswahlkomponente (220).

2. Videoreproduktionseinrichtung nach Anspruch 1, wobei der Decoder (206) eine Dekompressionsvorrichtung einschließt zum Ausführen eines Dekompressionsprozesses zum Dekomprimieren von Videodaten von der Reproduktionskomponente (202), und die Grafikdaten in einem Format komprimiert sind, das von dem Dekompressionsprozess dekomprimiert werden kann.

3. Videoreproduktionseinrichtung nach Anspruch 1 oder 2, wobei die OSD-Menükomponente (205a, ..., 205n) eingerichtet ist, um ansprechend auf eine Benutzereingabe Grafikdaten für unterschiedliche Menüs auszugeben.

4. Videoreproduktionseinrichtung nach Anspruch 1, 2 oder 3, wobei die OSD-Menükomponente (205a, ..., 205n) ein von dem Aufzeichnungsmedium abweichendes Medium einschließt.

5. Videoreproduktionseinrichtung nach einem der vorhergehenden Ansprüche, wobei die OSD-Menükomponente (205a, ..., 205n) einen Halbleiterspeicher einschließt.

6. Videoreproduktionseinrichtung nach einem der vorhergehenden Ansprüche, eine Dekompressionsvorrichtung einschließend zum Dekomprimieren von von einem Aufzeichnungsmedium durch die Reproduktionskomponente (202) reproduzierten Videodaten.

7. Videoreproduktionseinrichtung nach einem der vorhergehenden Ansprüche, wobei die Grafikdaten komprimiert sind.

8. Verfahren des Betreibens einer Videoreproduktionseinrichtung, wobei das Verfahren umfasst:
Auslesen von in einem Aufzeichnungsmedium gespeicherten Videodaten, und
Speichern und Ausgeben von Grafikdaten, um eine OSD-Menüanzeige einzustellen,
**gekennzeichnet durch** das Auswählen und Anzeigen der Videodaten und/oder der Grafikdaten einschließlich dem Decodieren von Videodaten von der Reproduktionskomponente unter Verwendung eines Decodierprozesses und Decodieren der Grafikdaten unter Verwendung des Decodierprozesses vor deren Anzeige.

9. Verfahren nach Anspruch 8, ferner das Dekomprimieren der von dem Aufzeichnungsmedium reproduzierten Videodaten unter Verwendung eines Dekompressionsprozesses umfassend und das Dekomprimieren der Grafikdaten unter Verwendung dieses Dekompressionsprozesses.

10. Verfahren nach Anspruch 8 oder 9, das Ansprechen auf eine Benutzereingabe zum Auswählen von Grafikdaten für ein spezielles Menü zum Anzeigen einschließend.

11. Verfahren nach Anspruch 8, 9 oder 10, wobei die Grafikdaten von einer Quelle bereitgestellt werden, die sich von dem die Videodaten bereitstellenden Aufzeichnungsmedium unterscheidet.

12. Verfahren nach einem der Ansprüche 8 bis 11, wobei die Grafikdaten von einem Halbleiterspeicher zum Anzeigen ausgelesen werden.

13. Verfahren nach einem der Ansprüche 8 bis 12, eine Dekompression der von dem Aufzeichnungsmedium reproduzierten Videodaten einschließend.

14. Verfahren nach einem der Ansprüche 8 bis 13, das Dekomprimieren der Grafikdaten zum Anzeigen einschließend.

## Revendications

1. Dispositif de reproduction vidéo comprenant une composante de reproduction (202) adaptée pour lire des données vidéo stockées dans un support d'enregistrement, une composante de menus d'affichage à l'écran (OSD pour on-screen display) (205a à 205n) adaptée pour stocker et pour délivrer des données graphiques de manière à régler un affichage de menus OSD, un contrôleur (220, 240) adapté pour sélectionner et pour afficher les données vidéo et/ou les données graphiques, et un décodeur (206) servant à décoder les données vidéo provenant de la composante de reproduction (202), **caractérisé en ce que** les données graphiques sont sous une forme qui peut être décodée par le décodeur (206) et le contrôleur (220, 240) comprend :
une composante de sélection (220) adaptée pour délivrer sélectivement les données graphiques provenant de la composante de menus d'affichage à l'écran (OSD) (205a, ..., 205n) et/ou les données vidéo provenant de la composante de reproduction (202) au décodeur (206) ; et
une composante de commande de sélection (240) adaptée pour commander la composante de sélection (220).

2. Dispositif de reproduction vidéo selon la revendication 1, dans lequel le décodeur (206) comprend un moyen de décompression servant à réaliser un processus de décompression pour décompresser les données vidéo provenant de la composante de reproduction (202) et lesdites données graphiques sont compressées dans un format qui peut être décomprimé par ledit processus de décompression.

3. Dispositif de reproduction vidéo selon la revendication 1 ou 2, dans lequel ladite composante de menus OSD (205a, ..., 205n) est adaptée pour délivrer des données graphiques de différents menus en réponse à une saisie de l'utilisateur.

4. Dispositif de reproduction vidéo selon la revendication 1, 2 ou 3, dans lequel ladite composante de menus OSD (205a, ..., 205n) comprend un support différent du support d'enregistrement.

5. Dispositif de reproduction vidéo selon l'une quelconque des revendications précédentes, dans lequel ladite composante de menus OSD (205a à 205n) comprend une mémoire à semi-conducteurs.

6. Dispositif de reproduction vidéo selon l'une quelconque des revendications précédentes, comprenant un moyen de décompression servant à décompresser les données vidéo reproduites provenant d'un support d'enregistrement par la composante de reproduction (202).

7. Dispositif de reproduction vidéo selon l'une quelconque des revendications précédentes, dans lequel lesdites données graphiques sont compressées.

8. Procédé d'exploitation d'un dispositif de reproduction vidéo, le procédé comprenant les étapes qui consistent à :
lire des données vidéo stockées dans un support d'enregistrement, et
stocker et délivrer des données graphiques de manière à régler un affichage de menus OSD,
**caractérisé par** les étapes qui consistent à sélectionner et à afficher les données vidéo et/ou les données graphiques, comprenant le décodage de données vidéo provenant de la composante de reproduction en utilisant un processus de décodage et le décodage des données graphiques en utilisant ledit processus de décodage avant d'afficher ces données.

9. Procédé selon la revendication 8, comprenant de plus l'étape qui consiste à décompresser les données vidéo, reproduites à partir du support d'enregistrement, en utilisant un processus de décompression, et à décompresser lesdites données graphiques en utilisant ledit processus de décompression.

10. Procédé selon la revendication 8 ou 9, comprenant l'étape qui consiste à répondre à une saisie d'utilisateur pour sélectionner les données graphiques pour un menu particulier destiné à l'affichage.

11. Procédé selon la revendication 8, 9 ou 10, dans lequel les données graphiques sont délivrées par une source autre que le support d'enregistrement fournissant les données vidéo.

12. Procédé selon l'une quelconque des revendications 8 à 11, dans lequel lesdites données graphiques sont lues sur une mémoire à semi-conducteurs en vue de l'affichage.

13. Procédé selon l'une quelconque des revendications 8 à 12, comprenant l'étape qui consiste à décompresser les données vidéo reproduites à partir du support d'enregistrement.

14. Procédé selon l'une quelconque des revendications 8 à 13, comprenant l'étape qui consiste à décompresser les données graphiques en vue de l'affichage.
